# FASCICULE DE BREVET EUROPEEN

(11) **EP 2 836 378 B1**
(45) Date de publication et mention de la délivrance du brevet: **13.04.2016**
(21) Numéro de dépôt: 13704459.0
(22) Date de dépôt: 15.02.2013
(51) Int. Cl.: B60D 1/48, B62D 25/20

(54) **FIXATION D'UN DISPOSITIF D'ATTELAGE A SUPPORT DE REPARTITION D'EFFORT**
BEFESTIGUNG EINER ABSCHLEPPVORRICHTUNG MIT EINEM KRAFTVERTEILUNGSTRÄGER
ATTACHMENT OF A TOWING DEVICE WITH A FORCE DISTRIBUTION SUPPORT

(30) Priorité: 11.04.2012 FR 1253313
(43) Date de publication de la demande: 18.02.2015
(73) Titulaire: Renault S.A.S., 92100 Boulogne-Billancourt (FR)
(72) Inventeur: DE ALMEIDA, Luis Filipe, F-78650 Beynes (FR); LUTTON, Philippe, F-92270 Bois Colombes (FR)
(86) Numéro de dépôt international: PCT/EP2013/053134
(87) Numéro de publication internationale: WO 2013/152886

(56) Documents cités:
- DE-A1- 10 315 690
- DE-A1- 10 359 483
- DE-A1-102007 029 860
- DE-U1-202007 018 727
- JP-A- 5 338 508
- US-A1- 2011 309 606

## Description

### Domaine technique de l'invention

L'invention concerne un agencement pour la fixation sur un élément structurel creux d'une caisse d'un véhicule automobile, notamment sur un longeron creux de la caisse, d'une partie d'un dispositif d'attelage de remorque, notamment d'un longeron du dispositif d'attelage de remorque. L'invention a pour objet également un véhicule automobile en tant que tel comprenant un dispositif d'attelage de remorque et au moins un tel agencement.

### État de la technique

Un dispositif d'attelage de remorque est classiquement monté en deuxième monte sur les longerons de la caisse du véhicule, par l'intermédiaire de fixations horizontales. C'est notamment le cas sur un véhicule à vocation familiale. Les fixations horizontales assurent la liaison la plus rigide possible entre les bras de l'attelage et les longerons de la caisse du véhicule.

Un attelage, qui montre le préambule de la revendication 1, est divulgué dans le document DE 103 15 690 A1.

Avec un véhicule à vocation utilitaire, le contexte est différent et présente des contraintes supplémentaires, parmi lesquelles le fait que le dispositif d'attelage est assemblé en première monte directement en usine. Cette mise en place automatisée implique que les fixations soient orientées verticalement. Or des fixations verticales sont moins efficaces que des fixations horizontales. D'autre part, l'ensemble doit être dimensionné pour une masse remorquable minimale très élevée, par exemple de l'ordre de deux tonnes. Notamment, il doit être prévu la possibilité de fixer un dispositif d'attelage de classe « F » transmettant un niveau d'efforts supérieur à la caisse qu'un attelage de classe « A ». Les efforts transmis sont plus importants sur un attelage de classe « F » que sur un attelage de classe « A » en raison d'une position de l'organe d'accrochage plus défavorable impliquant une augmentation du bras de levier relativement à la caisse.

### Objet de l'invention

Le but de la présente invention est de proposer une solution de fixation d'un dispositif d'attelage de remorque qui remédie aux inconvénients listés ci-dessus.

Notamment, l'objet de l'invention est de fournir un agencement pour la fixation sur un élément structurel creux d'une caisse d'un véhicule automobile d'une partie d'un dispositif d'attelage de remorque, qui peut être monté en usine et qui soit à la fois robuste et économique.

L'invention concerne un agencement pour la fixation sur un élément structurel creux d'une caisse d'un véhicule automobile, notamment sur un longeron creux de la caisse, d'une partie d'un dispositif d'attelage de remorque, notamment d'un longeron du dispositif d'attelage de remorque, agencement comprenant :
- au moins un premier et au moins un deuxième éléments de serrage, respectivement situés à l'intérieur et au moins partiellement à l'extérieur de l'élément structurel, et configurés pour coopérer ensemble de sorte à créer un premier effort de serrage, orienté suivant une direction axiale notamment verticale, enserrant une première paroi de l'élément structurel, notamment une paroi inférieure, et ladite partie de dispositif d'attelage de remorque,
- et un support du premier élément de serrage disposé à l'intérieur de l'élément structurel et configuré pour coopérer avec le premier élément de serrage de sorte à reprendre des efforts transmis et encaissés par le premier élément de serrage suivant une direction différente de la direction axiale et à les répartir sur au moins une deuxième paroi de l'élément structurel, notamment une paroi latérale.

Le premier élément de serrage peut être une douille taraudée dont le taraudage, orienté selon la direction axiale, est destiné à recevoir une partie mâle filetée du deuxième élément de serrage constitué notamment par un boulon ou par une vis.

Le rapport entre la longueur et le diamètre du taraudage de la douille peut être supérieur à 3.

Le support du premier élément de serrage peut être configuré de sorte à positionner le premier élément de fixation à l'intérieur de l'élément structurel en maintenant la direction axiale fixe par rapport à l'élément structurel.

Le support du premier élément de serrage peut délimiter un logement destiné à recevoir le premier élément de serrage.

Le support du premier élément de serrage peut être une chape en forme de U ayant d'une part une aile de base dans laquelle ledit logement est formé et d'autre part deux ailes latérales destinées à venir en appui-plan respectivement sur deux deuxièmes parois opposées de l'élément structurel, notamment deux parois latérales opposées disposées de part et d'autre du premier élément de serrage.

L'agencement peut comprendre une plaque intermédiaire de renfort intercalée, suivant la direction axiale, entre la première paroi de l'élément structurel d'un côté, et le premier élément de serrage et le support du premier élément de serrage du côté opposé.

Un écrou distinct des premier et deuxième éléments de serrage peut être solidaire de la plaque intermédiaire de renfort, notamment par soudage, cet écrou coopérant avec un boulon ou une vis indépendant des premier et deuxième éléments de serrage pour créer un deuxième effort de serrage selon la direction axiale, s'ajoutant au premier effort de serrage et complétant le serrage de la première paroi de l'élément structurel avec la partie de dispositif d'attelage de remorque.

Un deuxième aspect de l'invention concerne un véhicule automobile comprenant un dispositif d'attelage de remorque et au moins un tel agencement fixant au moins une partie du dispositif d'attelage de remorque, notamment un longeron du dispositif d'attelage de remorque, à au moins un élément structurel creux de la caisse du véhicule, notamment un longeron creux de la caisse.

Il peut comprendre ainsi deux tels agencements assurant la fixation de deux parties du dispositif d'attelage de remorque décalées entre elles suivant une direction transversale au véhicule, notamment deux longerons du dispositif d'attelage de remorque décalés suivant la direction transversale l'un par rapport à l'autre.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un exemple d'agencement selon l'invention,
- les figures 2 et 5 sont des vues en perspective arrière illustrant l'agencement de la figure 1 lorsqu'il est monté sur un longeron creux de la caisse du véhicule,
- la figure 3 est une vue en coupe longitudinale-verticale (X, Z) de l'agencement de l'ensemble de la figure 2,
- et la figure 4 est une vue de dessous selon Z de l'ensemble de la figure 2.

### Description de modes préférentiels de l'invention

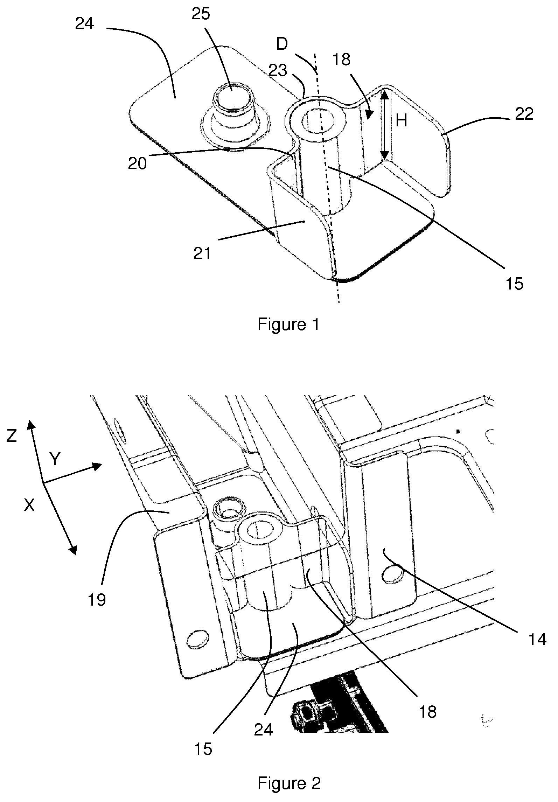

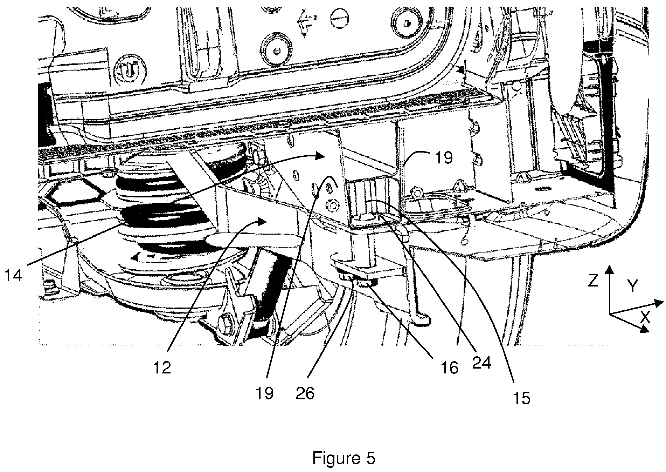

La description associée aux figures 1 à 5 est faite en référence à un repère orthonormé (X, Y, Z) associé classiquement à un véhicule automobile, dans lequel l'axe X est la direction longitudinale avant-arrière du véhicule dirigée vers l'arrière, l'axe Y est la direction transversale droite-gauche qui est horizontale et perpendiculaire à X, dirigée vers la droite, et l'axe Z est la direction verticale dirigée vers le dessus.

L'invention concerne généralement le domaine de la fixation de tout ou partie d'un dispositif d'attelage de remorque 10 sur une caisse d'un véhicule automobile. Le dispositif d'attelage 10 à fixer peut être de toute nature, mais est configuré pour appartenir notamment à la classe « F », de sorte à permettre la traction d'une masse remorquable de l'ordre de deux tonnes. Il est clair que l'agencement détaillé ci-dessous que comporte le véhicule et destiné à la fixation du dispositif d'attelage 10 sur la caisse du véhicule doit être conçu en conséquence.

A titre d'exemple non exclusif, le dispositif d'attelage de remorque 10 met en oeuvre un cadre en forme de U dont la base est constituée d'une traverse arrière 11 agencée selon Y, elle-même pourvue de la boule d'accrochage 13 en son milieu, et dont les deux ailes latérales sont formées par des longerons 12 dirigés globalement vers l'avant selon X.

Un tel dispositif d'attelage 10, notamment au niveau de la partie constituée par ses deux longerons 12, est à fixer sur deux éléments structurels creux de la caisse du véhicule automobile, notamment sur deux longerons 14 creux de la caisse. Pour y parvenir, le véhicule automobile qui comprend le dispositif d'attelage de remorque 10 comprend aussi au moins un agencement fixant au moins une partie du dispositif d'attelage de remorque 10, notamment un longeron 12 du dispositif d'attelage de remorque 10, à au moins un élément structurel creux de la caisse du véhicule, notamment à un longeron 14 creux de la caisse. Plus précisément, le véhicule comprend deux tels agencements assurant la fixation de deux parties du dispositif d'attelage de remorque 10 décalées entre elles suivant la direction transversale Y au véhicule, notamment deux longerons 12 du dispositif d'attelage de remorque 10 décalés suivant la direction transversale Y l'un par rapport à l'autre.

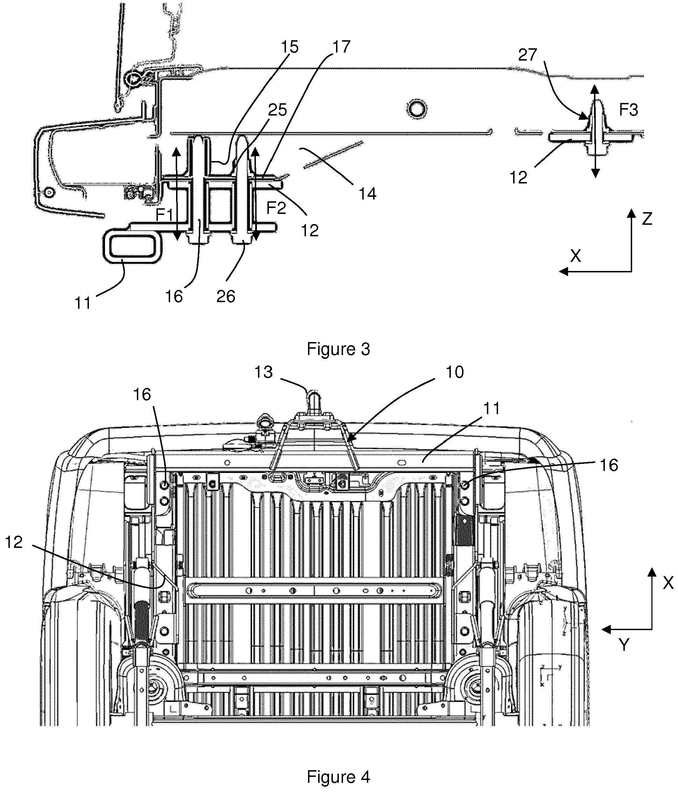

Chaque agencement est partiellement représenté en détails sur les figures 1 et 2 notamment. Selon une caractéristique essentielle, l'agencement assurant la fixation d'un longeron 12 donné sur un longeron 14 creux donné du véhicule, comprend principalement :
- au moins un premier élément de serrage 15 situé à l'intérieur de l'élément structurel constitutif du longeron 14 creux,
- au moins un deuxième élément de serrage 16 situé au moins partiellement à l'extérieur de l'élément structurel constitutif du longeron 14 creux, les premier et deuxième éléments de serrage 15, 16 étant configurés pour coopérer ensemble (notamment selon une liaison hélicoïdale de type vissage) de sorte à créer un premier effort de serrage F1 (figure 3), orienté suivant une direction axiale D associée à l'agencement (orientée notamment selon la direction verticale Z), cet effort F1 enserrant une première paroi 17 de l'élément structurel 14, notamment une paroi inférieure, et le longeron 12 du dispositif d'attelage de remorque 10.
- et un support 18 du premier élément de serrage 15, disposé également à l'intérieur de l'élément structurel 14 et configuré pour coopérer avec le premier élément de serrage 15 de sorte à reprendre des efforts (non représentés) transmis et encaissés par le premier élément de serrage 15 suivant une direction différente de la direction axiale D et à les répartir sur au moins une deuxième paroi 19 de l'élément structurel 14, notamment une paroi latérale.

Les efforts (non représentés) encaissés par le premier élément de serrage 15 et transmis au support 18 suivant une direction différente de la direction axiale D correspondent à des efforts de cisaillement, de flexion et de torsion non inclus dans la direction D et encaissés par le premier élément de serrage 15 sous l'action du longeron 12 lorsque le dispositif d'attelage 10 tracte une charge au niveau de la boule d'accrochage 13.

Avantageusement, le premier élément de serrage 15 est une douille taraudée dont le taraudage, orienté selon la direction axiale D, est destiné à recevoir hélicoïdalement une partie mâle filetée du deuxième élément de serrage 16 constitué notamment par un boulon ou par une vis. Ce boulon ou cette vis présente par exemple une partie disposée à l'extérieur du longeron 14 de sorte à rendre sa tête d'actionnement accessible tandis que sa partie mâle filetée vient à l'intérieur du longeron 14 par une ouverture adaptée. Cette douille est destinée à être aménagée à un emplacement du véhicule où il est estimé que la fixation entre le longeron 12 du dispositif 10 et le longeron 14 creux de la caisse du véhicule sera la plus sollicitée. L'utilisation d'une douille plutôt qu'un écrou dont la longueur suivant la direction axiale D serait nettement inférieure, permet d'avoir une longueur en prise avec le deuxième élément de serrage 16 très importante. Une forte proportion des efforts verticaux nécessaires au support du longeron 12 sur le longeron 14 de la caisse est encaissée par la douille. La longueur du filetage et la forme du support 18, qui fait donc intervenir les parois 19 du longeron 14 dans l'équilibre statique de la douille, permettent une excellente répartition des efforts sur les parois verticales 19 du longeron 14, ce qui soulage avantageusement le dessous du longeron 14, c'est-à-dire principalement sa paroi inférieure 17. Le rapport entre la longueur et le diamètre du taraudage de la douille est avantageusement supérieur à 3, assurant une bonne reprise d'efforts comparativement à une solution utilisant un écrou.

Une manière particulièrement simple de faire coopérer le premier élément de serrage 15 et son support 18 dans la transmission des efforts d'une pièce à l'autre est de prévoir que le support 18 soit configuré de sorte à positionner le premier élément de fixation 15 à l'intérieur de l'élément structurel (le longeron 14) en maintenant ou immobilisant la direction axiale D fixe par rapport à un référentiel (X, Y, Z) lié à l'élément structurel 14. Pour cela, le support 18 peut avantageusement délimiter un logement 23 destiné à recevoir le premier élément de serrage 15. Dans le cas où le premier élément de serrage 15 est une douille, ce logement 23 peut prendre la forme d'une gorge d'étendant sur toute la hauteur H du support 18 comptée suivant la direction axiale D, cette gorge par exemple présentant une section en forme de demi-cercle, ou pour le moins de forme complémentaire de la section en coupe de la douille.

Le support 18 du premier élément de serrage 15 est, dans la variante illustrée, une pièce monobloc constitutive d'une chape en forme générale de U dans un plan de coupe orthogonal à la direction axiale D. Le support 18 présente ainsi d'une part une aile de base 20 parallèle à la direction axiale D dans laquelle le logement 23 recevant le premier élément de serrage 15 est formé et d'autre part deux ailes latérales 21, 22 parallèles à la direction axiale D destinées à venir en appui-plan respectivement sur deux deuxièmes parois 19 opposées de l'élément structurel 14, notamment les deux parois latérales du longeron 14 opposées et disposées de part et d'autre du premier élément de serrage 15 suivant la direction transversale Y au véhicule.

En complément, l'agencement comprend une plaque intermédiaire de renfort 24 intercalée, suivant la direction axiale D, entre la première paroi 17 de l'élément structurel 14 d'un côté, et le premier élément de serrage 15 et le support 18 du côté opposé. Par son extrémité inférieure suivant la direction axiale D, le support 18 vient en appui contre cette plaque de renfort 24. Cette disposition permet une transmission d'efforts du support 18 vers la plaque de renfort 24. D'autre part, le premier élément de serrage 15 vient également en appui contre la plaque 24 par son extrémité inférieure suivant la direction axiale D. Ainsi, les efforts axiaux sont directement transmis du premier élément de serrage 15 vers la plaque 24. Cette plaque 24 étant en contact de type appui-plan sur la paroi inférieure 17 du longeron 14 de la caisse à l'intérieur de laquelle le support 18 et le premier élément de serrage 15 sont également disposés, la plaque 24 répartit directement sur la première paroi 17 l'ensemble des efforts qu'elle encaisse en provenance du support 18 et/ou du premier élément de serrage 15.

Les efforts (non représentés) encaissés par le premier élément de serrage 15 et transmis directement par le premier élément de serrage 15 à la plaque intermédiaire de renfort 24 suivant la direction axiale D correspondent principalement à des efforts de traction-compression axiaux. La plaque 24 peut donc aussi encaisser des efforts transmis par le support 18 sous l'effet des efforts non-axiaux transmis par le premier élément de serrage 15. Autrement dit, les efforts transmis au support 18 par le premier élément de serrage 15 sous l'effet d'efforts encaissés par le premier élément de serrage 15 suivant une direction différente de la direction axiale D peuvent être répartis par le support 18 non pas uniquement sur les deux deuxièmes parois 19 de l'élément structurel 14 (par exemple les paroi latérales) mais également sur la première paroi 17 (i.e. par exemple la paroi inférieure du longeron 14).

Avantageusement, un écrou 25 distinct des premier et deuxième éléments de serrage 15, 16 est solidaire de la plaque intermédiaire de renfort 24, notamment par soudage. Cet écrou 25 coopère avec un boulon 26 ou une vis indépendant des premier et deuxième éléments de serrage 15, 16 pour créer un deuxième effort de serrage F2 selon la direction axiale D, s'ajoutant au premier effort de serrage F1 et complétant le serrage de la première paroi 17 de l'élément structurel 14 avec la partie à fixer de dispositif d'attelage de remorque 10. L'écrou 25 présente un taraudage nettement inférieur à celui équipant la douille. L'écrou 25 et le boulon 26 sont donc dirigés verticalement, selon Z, de manière colinéaire à la direction axiale D.

Comme illustré sur la figure 3, les premier et deuxième éléments de serrage 15, 16 sont destinés à fixer la partie arrière de dispositif d'attelage de remorque 10 à proximité d'une extrémité arrière de cette partie comptée dans la direction longitudinale X du véhicule. D'autre part, ils sont destinés à être implantés en arrière, suivant X, de l'écrou 25 et du boulon 26, de sorte qu'ils sont les éléments de fixation les plus en arrière du véhicule. En complément de ces fixations en partie arrière, l'agencement peut avantageusement comprendre un système vis-écrou 27 supplémentaire destiné à fixer la partie avant de dispositif d'attelage de remorque 10 à proximité d'une extrémité avant de cette partie opposée à celle fixée par les éléments de serrage 15, 16, notamment opposée selon la direction longitudinale X du véhicule. Le système vis-écrou 27 a pour effet de créer un troisième effort de serrage F3 selon la direction axiale D enserrant l'élément structurel (ici le longeron 14 creux) et la partie (ici le longeron 12) de dispositif d'attelage de remorque 10. Le système vis-écrou 27 est donc dirigé verticalement, selon Z, de manière colinéaire à la direction axiale D.

La solution décrite précédemment est simple, efficace, robuste et permet en outre de ne pas nécessiter de pièces supplémentaires, ni de grever la masse ou le temps de montage. Toutes les fixations par serrage sont orientées verticalement, permettant un montage en première monte directement en usine.

## Revendications

1. Agencement fixé sur un élément structurel (14) creux d'une caisse d'un véhicule automobile, notamment sur un longeron creux de la caisse, d'une partie d'un dispositif d'attelage de remorque (10), notamment d'un longeron (12) du dispositif d'attelage de remorque, agencement comprenant :
- au moins un premier et au moins un deuxième élément de serrage (15, 16), respectivement situés à l'intérieur et au moins partiellement à l'extérieur de l'élément structurel (14), et configurés pour coopérer ensemble de sorte à créer un premier effort de serrage (F1), orienté suivant une direction axiale (D) notamment verticale, enserrant une première paroi (17) de l'élément structurel (14), notamment une paroi inférieure, et ladite partie de dispositif d'attelage de remorque, (10)
- et un support (18) du premier élément de serrage (15), disposé à l'intérieur de l'élément structurel (14), **caractérisé en ce que** le support (18) du premier élément de serrage est configuré pour coopérer avec le premier élément de serrage (15) de sorte à reprendre des efforts transmis et encaissés par le premier élément de serrage (15) suivant une direction différente de la direction axiale (D) et à les répartir sur au moins une deuxième paroi (19) de l'élément structurel (14), notamment une paroi latérale.

2. Agencement selon la revendication 1, **caractérisé en ce que** le premier élément de serrage (15) est une douille taraudée dont le taraudage, orienté selon la direction axiale (D), est destiné à recevoir une partie mâle filetée du deuxième élément de serrage (16) constitué notamment par un boulon ou par une vis.

3. Agencement selon la revendication 2, **caractérisé en ce que** le rapport entre la longueur et le diamètre du taraudage de la douille est supérieur à 3.

4. Agencement selon l'une des revendications 1 à 3, **caractérisé en ce que** le support (18) du premier élément de serrage (15) est configuré de sorte à positionner le premier élément de fixation (15) à l'intérieur de l'élément structurel (14) en maintenant la direction axiale (D) fixe par rapport à l'élément structurel (14).

5. Agencement selon l'une des revendications 1 à 4, **caractérisé en ce que** le support (18) du premier élément de serrage (15) délimite un logement (23) destiné à recevoir le premier élément de serrage (15).

6. Agencement selon la revendication 5, **caractérisé en ce que** le support (18) du premier élément de serrage (15) est une chape en forme de U ayant d'une part une aile de base (20) dans laquelle ledit logement (23) est formé et d'autre part deux ailes latérales (21, 22) destinées à venir en appui-plan respectivement sur deux deuxièmes parois (19) opposées de l'élément structurel (14), notamment deux parois latérales opposées disposées de part et d'autre du premier élément de serrage (15).

7. Agencement selon l'une des revendications 1 à 6, **caractérisé en ce qu'**il comprend une plaque intermédiaire de renfort (24) intercalée, suivant la direction axiale (D), entre la première paroi (17) de l'élément structurel (14) d'un côté, et le premier élément de serrage (15) et le support (18) du premier élément de serrage (15) du côté opposé.

8. Agencement selon la revendication 7, **caractérisé en ce qu'**un écrou (25) distinct des premier et deuxième éléments de serrage (15, 16) est solidaire de la plaque intermédiaire de renfort (24), notamment par soudage, cet écrou (25) coopérant avec un boulon (26) ou une vis indépendant des premier et deuxième éléments de serrage (15, 16) pour créer un deuxième effort de serrage (F2) selon la direction axiale (D), s'ajoutant au premier effort de serrage (F1) et complétant le serrage de la première paroi (17) de l'élément structurel (14) avec la partie de dispositif d'attelage de remorque (10).

9. Véhicule automobile comprenant un dispositif d'attelage de remorque (10) et au moins un agencement selon l'une quelconque des revendications 1 à 8 fixant au moins une partie du dispositif d'attelage de remorque (10), notamment un longeron (12) du dispositif d'attelage de remorque, à au moins un élément structurel (14) creux de la caisse du véhicule, notamment un longeron creux de la caisse.

10. Véhicule automobile selon la revendication 9, **caractérisé en ce qu'**il comprend deux agencements chacun selon l'une quelconque des revendications 1 à 8, assurant la fixation de deux parties du dispositif d'attelage de remorque décalées entre elles suivant une direction transversale (Y) au véhicule, notamment deux longerons (12) du dispositif d'attelage de remorque (10) décalés suivant la direction transversale (Y) l'un par rapport à l'autre.

## Patentansprüche

1. Anordnung, die an einem Hohlstrukturelement (14) einer Kraftfahrzeugkarosserie befestigt ist, insbesondere an einem hohlen Längsträger der Karosserie, aus einem Teil einer Anhängerkupplungsvorrichtung (10), insbesondere eines Längsträgers (12) der Anhängerkupplungsvorrichtung, wobei die Anordnung Folgendes umfasst:
- wenigstens ein erstes und wenigstens ein zweites Klemmelement (15, 16), die sich innerhalb bzw. wenigstens teilweise außerhalb des Strukturelements (14) befinden und konfiguriert sind, zusammenzuwirken, um eine erste Klemmkraft (F1) zu erzeugen, die in einer axialen, insbesondere vertikalen Richtung (D) orientiert ist und eine erste Wand (17) des Strukturelements (14), insbesondere eine untere Wand, und den Teil der Anhängerkupplungsvorrichtung (10) einklemmt,
- und einen Träger (18) des ersten Klemmelements (15), der in dem Strukturelement (14) angeordnet ist, **dadurch gekennzeichnet, dass** der Träger (18) des ersten Klemmelements konfiguriert ist, mit dem ersten Klemmelement (15) zusammenzuwirken, derart, dass Kräfte, die durch das erste Klemmelement (15) längs einer von der axialen Richtung (D) verschiedenen Richtung übertragen und ausgeübt werden, aufgenommen werden und auf wenigstens eine zweite Wand (19) des Strukturelements (14), insbesondere eine Seitenwand, verteilt werden.

2. Anordnung nach Anspruch 1, **dadurch gekennzeichnet, dass** das erste Klemmelement (15) eine Gewindehülse ist, deren Gewinde, das in der axialen Richtung (D) orientiert ist, dazu bestimmt ist, einen Gewindestiftteil des zweiten Klemmelements (16), der insbesondere durch einen Bolzen oder eine Schraube gebildet ist, aufzunehmen.

3. Anordnung nach Anspruch 2, **dadurch gekennzeichnet, dass** das Verhältnis zwischen der Länge und dem Durchmesser des Gewindes der Hülse größer als 3 ist.

4. Anordnung nach einem der Ansprüche 1 bis 3, **dadurch gekennzeichnet, dass** der Träger (18) des ersten Klemmelements (15) in der Weise konfiguriert ist, dass das erste Befestigungselement (15) in dem Strukturelement (14) unter Beibehaltung der festen axialen Richtung (D) in Bezug auf das Strukturelement (14) positioniert wird.

5. Anordnung nach einem der Ansprüche 1 bis 4, **dadurch gekennzeichnet, dass** der Träger (18) des ersten Klemmelements (15) einen Aufnahmeraum (23) begrenzt, der dazu bestimmt ist, das erste Klemmelement (15) aufzunehmen.

6. Anordnung nach Anspruch 5, **dadurch gekennzeichnet, dass** der Träger (18) des ersten Klemmelements (15) eine Abdeckung in U-Form ist, die einerseits einen Basisflügel (20), in dem der Aufnahmesitz (23) gebildet ist, und andererseits zwei Seitenflügel (21, 22), die dazu bestimmt sind, sich auf zwei gegenüberliegenden Wänden (19) des Strukturelements (14), insbesondere zwei gegenüberliegenden Seitenwänden, die beiderseits des ersten Klemmelements (15) angeordnet sind, eben abzustützen, besitzt.

7. Anordnung nach einem der Ansprüche 1 bis 6, **dadurch gekennzeichnet, dass** sie eine Verstärkungszwischenplatte (24) umfasst, die in der axialen Richtung (D) zwischen der ersten Wand (17) des Strukturelements (14) auf einer Seite und dem ersten Klemmelement (15) und dem Träger (18) des ersten Klemmelements (15) auf der gegenüberliegenden Seite eingefügt ist.

8. Anordnung nach Anspruch 7, **dadurch gekennzeichnet, dass** eine von dem ersten und dem zweiten Klemmelement (15, 16) verschiedene Mutter (25) mit der Verstärkungszwischenplatte (24) insbesondere durch Schweißen befestigt ist, wobei diese Mutter (25) mit einem Bolzen (26) oder einer Schraube, die von dem ersten und dem zweiten Klemmelement (15, 16) unabhängig sind, zusammenwirkt, um eine zweite Klemmkraft (F2) in axialer Richtung (D) zu erzeugen, die zu der ersten Klemmkraft (F1) hinzukommt und die Klemmung der ersten Wand (17) des Strukturelements (14) an dem Teil der Anhängerkupplungsvorrichtung (10) ergänzt.

9. Kraftfahrzeug, das eine Anhängerkupplungsvorrichtung (10) und wenigstens eine Anordnung nach einem der Ansprüche 1 bis 8 umfasst, die wenigstens einen Teil der Anhängerkupplungsvorrichtung (10), insbesondere einen Längsträger (12) der Anhängerkupplungsvorrichtung, an wenigstens einem hohlen Strukturelement (14) der Fahrzeugkarosserie, insbesondere einem hohlen Längsträger der Karosserie, befestigt.

10. Kraftfahrzeug nach Anspruch 9, **dadurch gekennzeichnet, dass** es zwei Anordnungen jeweils nach einem der Ansprüche 1 bis 8 umfasst, die die Befestigung von zwei Teilen der Anhängerkupplungsvorrichtung, die zueinander in einer Querrichtung (Y) versetzt sind, an dem Fahrzeug, insbesondere zwei Längsträgern (12) der Anhängerkupplungsvorrichtung (10), die in der Querrichtung (Y) zueinander versetzt sind, sicherstellen.

## Claims

1. Arrangement fixed to a hollow structural element (14) of a body of a motor vehicle, notably to a hollow rail of the body, a part of a trailer hitch (10), notably a rail (12) of the trailer hitch, this arrangement including:
- at least one first and at least one second clamping element (15, 16) respectively located inside and at least partly outside the structural element (14) and configured to cooperate together to create a first clamping force (F1) oriented in an axial, notably vertical direction (D), clamping a first wall (17) of the structural element (14), notably a lower wall, and said portion of the trailer hitch (10), and
- a support (18) of the first clamping element (15) disposed inside the structural element (14), **characterized in that** the support (18) of the first clamping element is configured to cooperate with the first clamping element (15) to absorb forces transmitted and absorbed by the first clamping element (15) in a direction different from the axial direction (D) and to distribute them over at least one second wall (19) of the structural element (14), notably a lateral wall.

2. Arrangement according to Claim 1, **characterized in that** the first clamping element (15) is a threaded bush the thread of which, oriented in the axial direction (D), is intended to receive a threaded male portion of the second clamping element (16) notably consisting of a bolt or a screw.

3. Arrangement according to Claim 2, **characterized in that** the ratio between the length and the diameter of the thread of the bush is greater than 3.

4. Arrangement according to any one of Claims 1 to 3, **characterized in that** the support (18) of the first clamping element (15) is configured so as to locate the first fixing element (15) inside the structural element (14) with the axial direction (D) remaining fixed relative to the structural element (14).

5. Arrangement according to any one of Claims 1 to 4, **characterized in that** the support (18) of the first clamping element (15) delimits a housing (23) intended to receive the first clamping element (15).

6. Arrangement according to Claim 5, **characterized in that** the support (18) of the first clamping element (15) is a U-shaped yoke having on the one hand a base flange (20) in which said housing (23) is formed and on the other hand two lateral flanges (21, 22) intended to come into planar bearing engagement with two respective opposite second walls (19) of the structural element (14), notably two opposite lateral walls disposed on either side of the first clamping element (15).

7. Arrangement according to any one of Claims 1 to 6, **characterized in that** it includes an intermediate reinforcing plate (24) inserted in the axial direction (D) between the first wall (17) of the structural element (14) on one side and the first clamping element (15) and the support (18) of the first clamping element (15) on the opposite side.

8. Arrangement according to Claim 7, **characterized in that** a nut (25) separate from the first and second clamping elements (15, 16) is fastened, notably welded, to the intermediate reinforcing plate (24), this nut (25) cooperating with a bolt (26) or a screw independent of the first and second clamping elements (15, 16) to create a second clamping force (F2) in the axial direction (D) adding to the first clamping force (F1) and completing the clamping of the first wall (17) of the structural element (14) to the part of the trailer hitch (10).

9. Motor vehicle including a trailer hitch (10) and at least one arrangement according to any one of Claims 1 to 8 fixing at least one part of the trailer hitch (10), notably a rail (12) of the trailer hitch, to at least one hollow structural element (14) of the body of the vehicle, notably a hollow rail of the body.

10. Motor vehicle according to Claim 9, **characterized in that** it includes two arrangements each according to any one of Claims 1 to 8 for fixing two parts of the trailer hitch offset relative to each other in a direction (Y) transverse to the vehicle, notably two rails (12) of the trailer hitch (10) offset relative to each other in the transverse direction (Y).
